(19) Europäisches Patentamt
European Patent Office
Office européen des brevets

(11) **EP 2 648 839 B1**

(12) **EUROPÄISCHE PATENTSCHRIFT**

(45) Veröffentlichungstag und Bekanntmachung des Hinweises auf die Patenterteilung:
**19.02.2020  Patentblatt 2020/08**

(21) Anmeldenummer: **11810813.3**

(22) Anmeldetag: **12.12.2011**

(51) Int Cl.:
*B01J 20/12* *(2006.01)*      *B01J 20/18* *(2006.01)*
*B01J 20/28* *(2006.01)*      *B01J 20/30* *(2006.01)*
*C01B 39/36* *(2006.01)*      *B01D 15/00* *(2006.01)*
*B01J 39/26* *(2006.01)*      *B01D 53/02* *(2006.01)*
*B01D 53/04* *(2006.01)*      *C10G 25/00* *(2006.01)*

(86) Internationale Anmeldenummer:
**PCT/EP2011/072472**

(87) Internationale Veröffentlichungsnummer:
**WO 2012/076725 (14.06.2012 Gazette 2012/24)**

(54) **GRANULIERTE ZEOLITHE MIT HOHER ADSORPTIONSKAPAZITÄT ZUR ADSORPTION VON ORGANISCHEN MOLEKÜLEN**

GRANULATED ZEOLITES WITH HIGH ADSORPTION CAPACITY FOR ADSORPTION OF ORGANIC MOLECULES

ZÉOLITE EN GRANULÉS PRÉSENTANT UNE CAPACITÉ ÉLEVÉE D'ADSORPTION DE MOLÉCULES ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2010  DE 102010054069**
**10.06.2011  DE 102011104006**

(43) Veröffentlichungstag der Anmeldung:
**16.10.2013  Patentblatt 2013/42**

(73) Patentinhaber: **Süd-Chemie IP GmbH & Co. KG**
**81925 München (DE)**

(72) Erfinder:
• SOHLING, Ulrich
  85356 Freising (DE)
• ZAVREL, Michael
  81379 München (DE)
• KRAUS, Michael
  82178 Puchheim (DE)
• HOFMANN, Sandra
  97285 Röttingen (DE)
• VOGEL, Sandra
  84539 Ampfing (DE)

(74) Vertreter: **Graser, Konstanze**
**Clariant Produkte (Deutschland) GmbH**
**IPM / Patent & License Management**
**Arabellastrasse 4a**
**81925 München (DE)**

(56) Entgegenhaltungen:
**DE-B1- 1 567 870      US-B1- 6 171 568**

• **BREEN C; BROOKS J S; FORDER S; HAMER C E: "Organometallic cation-exchanged phyllosilicates: variable-temperature 57Fe Moessbauer spectroscopic and related studies of the adsorption of dimethylaminomethylferrocene on clays and pillared clays", JOURNAL OF MATERIALS CHEMISTRY, Bd. 6, Nr. 5, 1996, Seiten 849-859, XP008151604, GB ISSN: 0959-9428, DOI: 10.1039/JM9960600849**
• **LEE K-H ET AL: "Characterization of mordenites treated by HCl/steam or HF", MICROPOROUS AND MESOPOROUS MATERIALS, ELSEVIER, AMSTERDAM, NL, vol. 23, no. 3-4, 1 August 1998 (1998-08-01), pages 211-219, XP004149544, ISSN: 1387-1811, DOI: 10.1016/S1387-1811(98)00118-8**

**Beschreibung**

Die Erfindung betrifft granulierte Zeolithe mit hoher Adsorptionsfähigkeit von organischen Molekülen und den Einsatz der Zeolithe, um organische Moleküle aus Flüssigkeiten oder Gasströmen zu adsorbieren.

Biokraftstoffe wie beispielsweise Bioethanol haben eine günstige $CO_2$ Bilanz und gewinnen als Ersatzstoffe für fossile Brennstoffe mehr und mehr an Bedeutung. Als Bioethanol bezeichnet man Ethanol, das ausschließlich aus Biomasse (nachwachsende Kohlenstoffträger) oder aus biologisch abbaubaren Anteilen von Abfällen hergestellt wurde und für die Verwendung als Biokraftstoff bestimmt ist. Wird das Ethanol aus pflanzlichen Abfällen, Holz, Stroh oder Ganzpflanzen hergestellt, bezeichnet man es auch als Cellulose-Ethanol. Ethanol-Kraftstoffe werden als Energieträger in Verbrennungsmotoren und Brennstoffzellen verwendet. Insbesondere der Einsatz als Benzin-Ersatz bzw. -Zusatz in Kraftfahrzeugen und neuerdings auch Flugzeugmotoren hat in den letzten Jahren vor allem im Hinblick auf die immer deutlicher werdende Problematik im Zusammenhang mit fossilen Brennstoffen an Bedeutung gewonnen.

Die bisher übliche Produktion aus Stärke und Zuckerrohr wird den steigenden Bedarf an Bioethanol nicht decken können. Die nur begrenzt zur Verfügung stehenden landwirtschaftlichen Anbauflächen, ökologische Probleme bei der notwendigen Intensivierung der Landwirtschaft und die Konkurrenz zum Lebensmittelmarkt begrenzen die Produktion von Bioethanol auf diesem herkömmlichen Wege.

Im Rahmen der internationalen Preisanstiege für Rohstoffe und Lebensmittel und im Hinblick auf die sich daraus ergebenden Problematiken wurde auch die Rolle des Bioethanols als Konkurrenz zur Lebensmittelproduktion beleuchtet. Insbesondere in den Herstellerländern hat die Nutzung von Ackerpflanzen, die auch der Lebensmittelgewinnung dienen, zu einem rapiden Anstieg der Nahrungsmittelpreise geführt, da einheimische Käufer in direkter Konkurrenz zu Bioethanolkäufern in den westlichen Industrienationen stehen. In Mexiko hat dies schon zu einer staatlichen Preisregulierung für Mais per Notverordnung geführt, da dieser im großen Stil zu Ethanol für nordamerikanische Fahrzeuge verarbeitet wird.

Der Anbau von Energiepflanzen, die eigentlich der Lebensmittelerzeugung dienen, wurde bereits mehrfach als Gefahr für die Ernährung der Weltbevölkerung bezeichnet. Aus 100 kg Getreide lassen sich beispielsweise ungefähr 100 kg Brot herstellen, jedoch nur 25 Liter Bioethanol. Mit der Ernte von einem Hektar Getreideanbaufläche lassen sich rund 18 Menschen ein Jahr lang ernähren oder Bioethanol für ein Fahrzeug mit einem durchschnittlichen Verbrauch und moderater Kilometerleistung für ein Jahr herstellen. Der Betrieb eines Fahrzeuges verbraucht demnach so viel Getreide wie zur Ernährung von 18 Menschen notwendig ist.

Eine Alternative besteht darin, für die menschliche Ernährung ungeeignete Nutzpflanzen oder Pflanzenabfälle zu nutzen. Diese hauptsächlich aus Cellulose, Hemicellulose und Lignin bestehenden Materialien fallen beispielsweise bei der Gewinnung von Speiseölen oder der Verarbeitung von Zuckerrohr in hohen Mengen (oft sogar als Reststoffe) an. Diese Rohstoffe sind billiger als stärke- oder zuckerreiche Agrarrohstoffe. Zudem sind die potentiell nutzbare Biomasse pro Flächeneinheit höher, die $CO_2$-Bilanz positiver und der Anbau teilweise deutlich umweltschonender.

Ethanol, das aus pflanzlichen Abfällen hergestellt wird, wird als Cellulose-Ethanol oder Lignocellulose-Ethanol bezeichnet. Im Gegensatz zum herkömmlichen Bioethanol besitzt Cellulose-Ethanol eine bessere CO2-Bilanz und konkurriert nicht mit der Lebensmittelindustrie. Angestrebt wird dabei, in so genannten Bioraffinerien die Cellulose und Hemicellulose in vergärbare Zucker wie Glucose und Xylose umzuwandeln und von Hefen direkt zu Ethanol zu vergären. Das Lignin könnte als Brennstoff zum Antreiben des Prozesses benutzt werden. Bei derartigen biotechnologischen Prozessen fällt das Bioethanol im Gemisch mit Wasser an. Bei Verwendung von Mikroorganismen, die alle auftretenden Zucker, insbesondere die aus fünf Kohlenstoffatomen bestehenden Zucker wie Xylose, vergären können, liegt die erreichbare EthanolKonzentration sehr niedrig. Beispielsweise konnten Dominguez et al. (Biotech. Bioeng., 2000, Vol. 67, S. 336-343) zeigen, dass die Umsetzung von C5-Zuckern zu Ethanol mit der Hefe *Pichia stipitis* bei nur 2% (w/v) Ethanol inhibiert wird. Bei diesen geringen Ethanol-Konzentrationen ist der Energieaufwand für eine Destillation so hoch, dass eine destillative Abtrennung des Ethanols daher ausscheidet. Allerdings sind im Stand der Technik bisher keine Verfahren zur Herstellung von Lignocellulose-Ethanol bekannt, die eine wirtschaftliche Produktion und insbesondere eine effektive, nachhaltige und energiesparende Aufreinigung ermöglichen.

Adsorptionsmittel auf Basis von Zeolithen mit ihren spezifischen Eigenschaften, wie hohe chemische und thermische Beständigkeit, die Existenz eines regelmäßigen Kanalporensystems im Subnanometerbereich sowie die Ausbildung spezifischer Wechselwirkungen mit adsorbierten Molekülen aufgrund einer variablen Kationenzusammensetzung werden bereits in technischen Prozessen eingesetzt.

So werden Zeolithe im Bereich der Trocknung von Gasen oder Flüssigkeiten, insbesondere im Bereich der Luftzerlegung (kryogen oder nicht-kryogen) und hier insbesondere auf Faujasit- Zeolith (Typ X) basierende Adsorptionsmittel eingesetzt. Unter dem Begriff "Faujasit-Zeolith" versteht man eine Klasse von kristallinen Alumosilikaten, die auch als natürliches Mineral vorkommen. Wirtschaftliche Bedeutung haben jedoch nur die synthetischen Produkte mit Faujasit-Struktur. Innerhalb dieser Zeolithe mit Faujasitstruktur hat sich eine weitere Unterteilung nach der Zusammensetzung (speziell nach dem molaren Verhältnis von $SiO_2/Al_2O_3$) durchgesetzt. So bezeichnet man Produkte mit einem $SiO_2/Al_2O_3$ von mehr als 3,0 als Y-Zeolithe, solche mit einem $SiO_2/Al_2O_3$ von weniger als 3,0 als X-Zeolithe.

Nachteilig an klassischen Zeolithtypen (A und insbesondere Faujasite) ist, dass sie empfindlich gegenüber thermischer (hydrothermaler) Behandlung sind. Durch thermische Belastungen, insbesondere in Gegenwart von Wasserdampf, kann sich die Kristallstruktur der Zeolithe und damit auch ihre Eigenschaften, grundlegend ändern. Verwendet man Zeolithgranulate besteht ein weiterer Nachteil darin, dass das für die Stabilität der Granulate erforderliche Bindemittel keine Wirkung als Adsorptionsmittel hat. Man muss also die thermische Zersetzung der Porenbildner so durchführen, dass die thermische/hydrothermale Belastung des Granulates vermieden wird, welches zusätzlichen Aufwand erfordert. Die Problematik der thermischen Belastung betrifft bereits das Abbinden der klassisch eingesetzten mineralischen Bindemittel (wie z. B. Attapulgit), die - um druck- und abriebfeste Formkörper bilden zu können - eine Temperaturbehandlung im Bereich von 500 bis 600 °C erfahren müssen (z.B. US 6,743,745).

Um die vorstehend beschriebenen Verfahren großtechnisch durchführen zu können, ist es jedoch erforderlich, entsprechende Zeolithpulver in Granulate zu überführen, um die Druckverluste in den entsprechenden Adsorbersäulen in akzeptablen Grenzen zu halten. Hierzu müssen die entsprechenden Granulate einerseits hinreichend mechanisch stabil sein, andererseits muss durch die entsprechende Formulierung verhindert werden, dass durch die Binder die Adsorptionskapazität der Zeolithe im Vergleich zu den entsprechenden Pulvern stark herabgesetzt werden. Weiterhin sollte das Granulat möglichst wenig Wasser adsorbieren, was Binder mit einer geringen Wasserbindung erfordert. Vor diesem Hintergrund sind Granulate mit hydrophilen Bindern wie beispielsweise Aluminiumoxid nicht zielführend. Während des Sinterprozesses sollte die Hydrophobizität der Zeolithe nicht durch den Einbau vom Aluminium aus den Bindemitteln in die Zeolith-Struktur reduziert werden.

Nach dem Stand der Technik ist eine Reihe von Prozessen bekannt, mit denen Zeolithpulver in Granulate der Größen von 100 $\mu$m bis zu mehreren Millimetern überführt werden. Diese beinhalten zunächst einen Granulationsprozess mit Bindern, die meist anorganischer Natur sind, einem Trocknungsprozess bei Temperaturen zwischen 80 und 200°C sowie einem Sinterprozess bei Temperaturen von 400 bis 800°C. Als Granulationsprozesse werden bekannte Verfahren eingesetzt. Dies kann einerseits eine Rollgranulation sein, bei der die Pulvermischung mit Hilfe einer Flüssigkeit mit einem sogenannten Granulierteller aufgerollt wird. Weiterhin kann die Formgebung über Strangpressen und nachträgliches Zerkleinern erfolgen. Schließlich kann auch eine Granulation über eine mechanisch erzeugte Wirbelschicht durchgeführt werden.

Die DD 0154009 beschreibt ein Verfahren zur Herstellung hochabriebfester, staubfreier, zeolithischer Granulate durch Vermischung von Natriumzeolithpulver mit kaolitischem Ton im Mengenverhältnis 70-60 zu 30-40, Granulierung und Glühung bei 500-550°C, gefolgt von einer Nachkristallisation und erneuter Glühung bei 500-550°C, gekennzeichnet dadurch, dass die Nachkristallisation in der bei der Herstellung des Natrium-A-Zeoliths anfallenden Kristallisationsmutterlauge vorgenommen wird. Durch die Nachkristallisation soll sowohl die Adsorptionsfähigkeit der Granulate als auch die Festigkeit erhöht werden.

Die DD 268122 A3 beschreibt ein Verfahren zur Herstellung von Molekularsiebgranulaten, mit dem sich Granulate herstellen lassen, die sowohl gute adsorptive als auch mechanische Eigenschaften besitzen. Erfindungsgemäß werden diese Granulate durch Vermischen von einem montmorillonitreichen und einem kaolinitreichen Ton als Bindemittel zusammen mit dem Molekularsiebpulver unter Zusatz von Wasser, Trocknen und Glühen hergestellt. In dieser Erfindung wurde gefunden, dass der Anteil des montmorillonitreichen Tons in der Größenordnung von 5-30% und des kaolinitreichen Tons im Bindemittel im Bereich von 95-70% liegen muss.

Die DD 294921 A5 beschreibt die Verwendung eines zeolithischen Adsorptionsmittels mit verbesserter Adsorptionskinetik. Hier geht es um einen Einsatz zur Adsorption von Wasser und Wasserdampf in Isoliergläsern und nicht um die Bindung von organischen Molekülen wie in der vorliegenden Erfindung.

Die DD 121092 beschreibt ein Verfahren zur Herstellung von Zeolithgranulaten mit verbesserten dynamischen Adsorptionskapazitäten unter Beibehaltung der bekannten hohen mechanischen Festigkeiten. Als Bindemittel für die Zeolithgranulate werden Tone mit einer BET-Oberfläche zwischen 10 und 40 m$^2$/g eingesetzt.

Nach Vermischen des Zeolithpulvers mit dem Bindemittel wird das Gemisch in einem Kneter mit Wasser plastifiziert und auf einer Strangpresse zu Strängen mit Durchmessern von 3 mm verformt. Die Stränge werden getrocknet und 6 h bei 600°C geglüht. Nach den Ausführungen dieser Schrift (Seite 3), ist es ungünstig, mit hochquellfähigen Tonen, wie z.B. illitischen und montmorillonitischen Tonmineralen, zu granulieren, weil diese zwar ausgezeichnete mechanische Festigkeiten in den Granulaten erzeugen, dafür aber zu verschlechterten dynamischen Adsorptionskapazitäten führen. Unter dynamischer Adsorptionskapazität versteht man dabei die Menge an Adsorbat, mit der ein im Adsorber befindliches, von einem das Adsorbat enthaltenden Gas- oder Flüssigkeitsstrom durchströmtes Molekularsiebbett maximal beladen wird, wenn bei einer bestimmten Strömungsgeschwindigkeit die Adsorbatkonzentration am Adsorberausgang einen bestimmten Wert nicht überschreiten soll.

Die WO 8912603 beschreibt einen Prozess zur Herstellung von Zeolithagglomeraten für Molekularsiebe, in welchem der Binder selbst ein Zeolith ist. Bei dem Prozess wird so vorgegangen, dass eine Paste aus einem Zeolithpulver, einem Kieselsol und einer Natriumaluminatlösung hergestellt wird. Diese wird extrudiert, bei Raumtemperatur reifen gelassen, dann hitzebehandelt und calciniert. Aus dem Silicasol und dem Natriumaluminat soll sich bei dem Herstellungsprozess der entsprechende Zeolith ausbilden. Der Prozess beinhaltet eine Trocknung bei 50-100°C und eine Calcinierung bei Temperaturen zwischen 450 und 600°C.

Die EP 0124736 B1 beschreibt silicatgebundene Zeolithgranulate sowie ein Verfahren zu ihrer Herstellung und ihrer Verwendung. Der Prozess ist dadurch gekennzeichnet, dass ein vollständiger Austausch der Natriumionen im Bindemittel, welches üblicherweise Wasserglas darstellt, mit anderen Metallkationen durchgeführt wird, wobei der Zeolith ein Kation enthält, welches nicht im Bindemittel vorhanden ist. Üblicherweise wird hier so vorgegangen, dass der Zeolith zunächst mit Wasserglas granuliert, getrocknet und gesintert wird. Nachfolgend wird über einen Ionentausch Magnesium in die Granulate eingeführt. Hierzu werden die Granulate in einer Säule gepackt. Danach folgt nochmals ein Trocknungs- und Calcinierungsschritt. Dieses Verfahren ist zu aufwendig, um es allgemein für die Herstellung unterschiedlicher Zeolithgranulate bzw. -größen einzusetzen.

Die DE 3208672 A1 beschreibt einen abriebfesten, körnigen Zeolith und ein Verfahren zu seiner Herstellung. Die Zeolithgranulate sind dadurch gekennzeichnet, dass sie aus einem Kern und einer Hülle bestehen, wobei Kern und Hülle unterschiedliche Verhältnisse von Zeolith und Tonerdebindemittel enthalten. Die Herstellung der Granulate erfolgt wie nach dem Stand der Technik bekannt, d. h. erstens Formgebung, zweitens Trocknung für 3 h bei 100-150°C und drittens Sintern für 3 h bei 550 ± 30°C. Es wird aufgeführt, dass das Endprodukt ausgezeichnete zeolithische Eigenschaften wie Adsorptionsfähigkeit und Ionenaustauschfähigkeit als auch ausgezeichnete mechanische Eigenschaften wie Abriebfestigkeit und Druckfestigkeit aufweist. Als Anwendung ist im Wesentlichen Wasseradsorption untersucht worden. Es geht hier nicht um eine Adsorption von organischen Molekülen aus der Gasphase.

Die EP 0124737 B1 beansprucht magnesiumgebundene Zeolithgranulate vom Typ Zeolith A sowie ein Verfahren zu ihrer Herstellung und deren Verwendung. Die Granulate werden durch ihre Adsorption von organischen Gasen gekennzeichnet. Geschützt sind Granulate aus Zeolith A, die gemäß der vorher angeführten Erfindung EP 0124736 B1 hergestellt wurden.

Die US 6,264,881 B1 beschreibt ein Verfahren zur Herstellung von LSX-Zeolithagglomeraten. Hierin wird ein Prozess für die Herstellung von Faujasit-X-Agglomeraten beschrieben, die mindestens 95% Faujasit-LSX enthalten (Si/Al-Verhältnis = 1). Die Granulate werden aus LSX-Zeolith und einem Binder hergestellt, der aus Laponit (synthetischer Hectorit) besteht. Nach den Beispielen weisen die Granulate, die mit 10% Laponit gebildet werden, eine wesentlich höhere Adsorptionskapazität für Sauerstoff und Stickstoff auf als solche, die mit 15% Attapulgitton als Binder hergestellt werden.

Die EP 1468731 A1 beschreibt ein Verfahren zur Herstellung von verformten Zeolithen und Verfahren zur Entfernung von Verunreinigungen aus einem Gasstrom. Dabei handelt es sich um einen verformten Zeolith auf der Basis eines Faujasits des Typs 13X oder des Typs LSX oder einer Mischung beider Typen. Diese werden zu einem Granulat mit einem Binder verarbeitet, der zum Teil hochdispers ist. Gemäß Anspruch 1 handelt es sich bei dem Binder um Attapulgit. Die rohen Zeolithkörper bzw. Granulate werden nach der Formgebung getrocknet und calciniert. Die Schüttdichte der Granulate ist > 550 g/l, der Anteil des Binders im fertigen Adsorptionsmittel liegt gemäß Anspruch 3 zwischen 3 und 30 Gew.-%. Der Binder kann aber auch 10-90% eines herkömmlichen Tonbinders enthalten. Es wird damit argumentiert, dass die spezielle Granulatformulierung insbesondere geeignet ist, um Gasströme von Wasserdampf und Kohlendioxid als Verunreinigung zu reinigen, wobei die speziellen Granulatformulierungen eine hohe Standzeit und außerordentlich hohe Adsorptionskapazitäten aufweisen.

Die WO 0001478 beschreibt ein Adsorbens aus einem Molekularsieb zur Reinigung von Gasen und ein Herstellungsverfahren dieses Adsorbens. Das Granulat basiert auf der Natriumform eines Niedrigsilicafaujasits, welcher ein Silicium / Aluminium-Verhältnis von ungefähr 1,8 bis 2,2 enthält mit einem Restkaliumgehalt von weniger als 8% und einem Binder. Das Granulat soll zur Entfernung von Kohlendioxid und Wasser aus Gasen eingesetzt werden.

Die WO 03061820 A2 beschreibt einen Prozess für die Herstellung molekularsiebbasierter Adsorbentien. Diese basieren auf Mischungen von Zeolithen und hochdispergierten Attapulgiten. Die Formkörper werden zur Aufreinigung von Gasen oder Flüssigkeiten eingesetzt. Das Einsatzgebiet für die Gasreinigung liegt in der Anwendung in der sogenannten Pressure Swing Adsorption (PSA) und Temperature Swing Adsorption (TSA). Die Porengröße der Formkörper wird auch dadurch erhöht, dass organische Materialien zugesetzt werden, die während des Sinterprozesses rückstandslos verbrennen, wie z. B. Sisal, Flachs, Maisstärke, Lignosulfonate, Cellulosederivate etc.. Der Einsatz der Formkörper liegt in der Trocknung von Gasproduktströmen, wie z. B. gasförmigem Ethanol, in der Abtrennung von Stickstoff aus Luftströmen sowie in der Abtrennung von schwefel- oder sauerstoffhaltigen Verbindungen aus Kohlenwasserstoffströmen. In einer weiteren Anwendung wird die Entfernung von Kohlenmonoxid, Kohlendioxid und Stickstoff aus Wasserstoffgasströmen angeführt.

Die WO 2008/152319 A2 beschreibt runde Agglomerate, die auf Zeolithen basieren sowie einen Prozess zu deren Herstellung und deren Einsatz in Adsorptionsprozessen oder in der Katalyse. Geschützt sind hier agglomerierte Zeolithe, die einen Zeolithgehalt von mindestens 70, bevorzugt mindestens 80, besonders bevorzugt mindestens 90 Gew.-% enthalten, wobei der Rest der Zusammensetzung aus einem inerten Material besteht. Die Zeolithe sind charakterisiert gemäß Anspruch 1 durch D50-Werte < 600 $\mu$m, einem Schüttgewicht von 0,5-0,8 g/cm$^3$ sowie weiteren Eigenschaften, die in Anspruch 1 angeführt sind. Anspruch 2 beschränkt die Zusammensetzung auf den Einsatz von Zeolith A, Faujasit, Zeolith X, Y, LSX, Chabasit und Clinoptilolit. Nach Anspruch 3 ist das Inertmaterial bestehend aus einem Ton oder einer Mischung von Ton. Hier ist ein breites Tonspektrum angeführt. Die Herstellung der Granulate erfolgt auf einem Granulierteller. Schließlich wird getrocknet und 2 h bei 550°C gesintert.

Die WO 2008/009845 A1 beschreibt agglomerierte Zeolithadsorbentien, ein Verfahren zu deren Herstellung sowie deren Einsatzgebiete. In dieser Schrift geht es im Wesentlichen um eine Granulation von Zeolith X mit einem Silicium / Aluminium-Verhältnis zwischen 1,15 < Si / Al ≤ 1,5. Als Einsatzgebiete werden die Adsorption von para-Xylol in C8-Aromaten, Kohlenwasserstofffraktionen und Flüssigkeiten, aber auch die Trennung von Zucker, Polyalkoholen, Kresolen und substituierten Toluolisomeren angeführt.

Die WO 2009/109529 A1 beschreibt ein Adsorptionsmittelgranulat auf der Basis von X-Zeolith mit Faujasitstruktur und einem molaren $SiO_2/Al_2O_3$-Verhältnis von ≥ 2, 1 - 2, 5, wobei das Granulat einen mittleren Durchmesser der Transportporen von > 300 nm und einen vernachlässigbaren Anteil an Mesoporen aufweist und wobei die mechanischen Eigenschaften des Granulates mindestens gleich oder besser als die Eigenschaften eines mittels inertem Bindemittel verformten, X-Zeolith-basierenden Granulats sind, und die Gleichgewichtsadsorptionskapazitäten für Waser, $CO_2$ und Stickstoff mit denen an reinem X-Zeolith-Pulver mit vergleichbarer Zusammensetzung identisch sind.

Die US 6,171,568 B1 offenbart Strangpresslinge umfassend dealuminierten Y-Zeolith mit einem $SiO_2/Al_2O_3$ Verhältnis von 200 sowie "Westone-L" Bentonit (enthaltend Montmorillonit, ein Schichtsilikat) bzw. Sepiolith.

Der vorliegenden Erfindung lag nun die Aufgabe zugrunde, Granulate zur Adsorption von organischen Molekülen aus Gasen und Flüssigkeiten bereitzustellen, die eine ausreichend hohe Stabilität auch für technische Säulenpackungen, eine hohe Adsorptionskapazität für die Zielmoleküle aber gleichzeitig niedrige Adsorptionskapazitäten für Wasser aufweisen.

Überraschend wurde nun gefunden, dass sich solche Granulate aus einem Zeolith und bestimmten Tonmineral(en) als Bindemittel herstellen lassen.

Die vorliegende Erfindung betrifft daher in einem ersten Aspekt ein Granulat gemäß Anspruch 1.

Granulate, die mindestens einen Zeolith und mindestens ein Tonmineral mit einer Kationenaustauschkapazität von weniger als 200 meq/100g umfassen, wobei der Anteil einwertiger Ionen an der Kationenaustauschkapazität des Tonminerals bei weniger als 50 % liegt, sind zur Lösung der erfindungsgemäßen Aufgabe geeignet.

Als Zeolith kann jeder Zeolith eingesetzt werden, der dem Fachmann als für den erfindungsgemäßen Zweck geeignet bekannt ist. Besonders geeignet und bevorzugt sind dabei hydrophobe Zeolithe, insbesondere Zeolithe mit einem $SiO_2$ : $Al_2O_3$ Verhältnis von mindestens 20, bevorzugt, mindestens 100, weiter bevorzugt mindestens 200, besonders bevorzugt mindestens 350 und am meisten bevorzugt mindestens 500. Dabei ist es ebenfalls möglich dass das Granulat zwei oder mehr unterschiedliche Zeolithe umfasst. Diese können in gleichen oder unterschiedlichen Anteilen vorliegen. Erfindungsgemäße Zeolithe sind Zeolithe ausgewählt aus der Gruppe bestehend aus β-Zeolith, Silicalit, Mordenit, USY, Ferrierit, Erionit, MFI Zeolith und deren Mischungen. Bevorzugte Kombinationen waren beispielsweise solche aus MFI-Zeolith und Beta-Zeolith.

Bevorzugte Zeolithe weisen eine durchschnittliche Porengröße von mindestens 3,5 Å und höchstens 10 Å, bevorzugt mindestens 4 Å und höchstens 8 Å, und am meisten bevorzugt mindestens 5 Å auf. Bevorzugte Zeolithe weisen weiterhin bevorzugt eine durchschnittliche Kanal- und Superkäfiggröße von mindestens 1 Å und höchstens 20 Å auf. Desweiteren ist es möglich, dass die durchschnittliche Porengröße der Zeolithe bei höchstens 20 Å, bevorzugt höchstens 10 Å und besonders bevorzugt bei höchstens 7 Å liegt.

Als Tonmineral kann jedes Tonmineral eingesetzt werden, dass die Voraussetzung einer Kationenaustauschkapazität von höchstens 200 meq/ 100g erfüllt, wobei der Anteil einwertiger Ionen an der Kationenaustauschkapazität des Tonminerals bei höchstens 50 % liegt. Besonders bevorzugt sind Tonminerale mit einer Kationenaustauschkapazität von höchstens 150 meq/ 100g, weiter bevorzugt von höchstens 100 meq/ 100g, ebenfalls bevorzugt von höchstens 80 meq / 100g, insbesondere bevorzugt von höchstens 60 meq / 100g, bevorzugter von höchstens 50 meq / 100g und am meisten bevorzugt von höchstens 40 meq / 100g. Desweiteren ist es möglich, dass die Kationenaustauschkapazität des Tonminerals bei mindestens 5 meq / 100g, bevorzugter bei mindestens 10 meq / 100g, weiter bevorzugt bei mindestens 15 meq / 100g und am meisten bevorzugt bei mindestens 20 meq / 100g liegt.

Dabei ist es weiter bevorzugt, wenn der Anteil einwertiger Ionen an der Kationenaustauschkapazität bei bevorzugt höchstens 45 %, weiter bevorzugt höchstens 35 %, ebenfalls bevorzugt höchstens 30 %, liegt. Besonders bevorzugt sind dabei Tonminerale mit einer Kationenaustauschkapazität von höchstens 110 meq / 100g und einem Anteil einwertiger Ionen an der Kationenaustauschkapazität von höchstens 20 %. Desweiteren ist es möglich, dass der Anteil einwertiger Ionen an der Kationenaustauschkapazität bei mindestens 1 %, bevorzugt mindestens 5 % liegt.

Der Anteil zweiwertiger Kationen, insbesondere der Calciumionen an der Kationenaustauschkapazität des Tonminerals liegt dabei bevorzugt bei mindestens 40 %, weiter bevorzugt bei mindestens 40 %, insbesondere bevorzugt bei mindestens 50 %, bevorzugter bei mindestens 60 % und am meisten bevorzugt bei mindestens 70 %. Desweiteren ist es in weiteren Ausführungsformen möglich, dass der Anteil zweiwertiger Kationen, insbesondere der Calciumionen, bei höchstens 99 % oder höchstens 90 %, liegt.

Weiter ist es im Rahmen der vorliegenden Erfindung besonders bevorzugt, wenn der Anteil an Natriumionen an der Kationenaustauschkapazität bei höchstens 25 %, bevorzugter höchstens 15 %, weiter bevorzugt bei höchstens 5 % und am meisten bevorzugt bei höchstens 1 % liegt. Desweiteren ist es möglich, dass der Anteil an Natriumionen an der Kationenaustauschkapazität bei mindestens 0,01 % oder mindestens 0,1 % oder auch mindestens 1 % liegt. Ebenfalls bevorzugt ist es, wenn das Tonmineral frei von austauschbaren Natrium Ionen ist.

Besonders bevorzugt ist ein Granulat bei dem das mindestens eine Tonmineral ein Verhältnis von zweiwertigen Ionen $Ca^{2+}$ und $Mg^{2+}$ zu einwertigen Ionen, als Summe von $Na^+ + K^+ + Li^+$, bestimmt aus Messungen der Kationenaustauschkapazität, aufweist, welches zwischen 1:2 und 20:1 liegt.

Weiter ist es im Rahmen der vorliegenden Erfindung bevorzugt, wenn das mindestens eine Tonmineral ein Schichtsilikat ist.

Grundsätzlich kann im Rahmen der vorliegenden Erfindung jedes Schichtsilikat eingesetzt werden, dass die Vorgabe einer Kationenaustauschkapazität von höchstens 200 meq/ 100g und einen Anteil einwertiger Ionen an der Kationenaustauschkapazität von höchstens 50 % erfüllt. Besonders bevorzugt sind dabei smektitische Schichtsilikate, wie Montmorillonit, Aliettit, Corrensit, Kulkeit, Lunijianlait, Rectorit, Saliotit, Tarasovit, Tosudit, Beidellit, Brinrobertsit, Nontronit, Swinefordit, Volkonskoit, Yakhontovit, Hectorit, Ferrosaponit, Saponit, Sauconit, Spadait, Stevensit, Zinksilit und deren Mischungen. Dabei ist es ebenfalls möglich, dass das Granulat zwei oder mehr unterschiedliche Tonminerale umfasst. Diese können in gleichen oder unterschiedlichen Anteilen vorliegen. Beispielsweise können Kombinationen aus Saponiten und Montmorilloniten eingesetzt werden.

Weitere bevorzugte Schichtsilikate, die für die Herstellung der erfindungsgemäßen Granulate eingesetzt werden können, sind die der Talc-Pyrophyllit-Gruppe. Beispiele sind Talc, Pyrophyllit und Kerolith. Schließlich sind auch Schichtsilikate bevorzugt, die Mischungen bzw. Wechsellagerungssyste-me(Minerale) von Schichtsilikaten der Talc-Pyrophyllith-Gruppe und smektitischen Schichtsilikaten darstellen. Ein Beispiel hierfür stellen Kerolith-Stevensit-Tone dar, wie sie in J.L. de Vidales et al., Kerolite-Stevensite Mixed-Layers from the Madrid Basin, Central Spain, Clay Minerals (1991) 26, 329-342 beschrieben sind. Bevorzugt sind Verhältnisse von Kerolith zu Stevensit von 3: 1 bis 1:3. Alternativ können Tonminerale eingesetzt werden , die aus Mischungen von Saponit und Kerolith bestehen, wobei deren Verhältnis bevorzugterweise zwischen 3: 1 bis 1:3 liegt.

In besonders bevorzugten Ausführungsformen ist das Schichtsilikat ein Mineral der Talc-Pyrophyllith-Gruppe. Ebenfalls besonders bevorzugt ist es, wenn das Schichtsilikat eine natürliche oder künstliche Mischung aus einem Ton der Talc-Pyrophyllith-Gruppe und einem smektitischen Ton ist.

Desweiteren ist es gemäß einer besonderen Ausführungsform der vorliegenden Erfindung bevorzugt, wenn der Anteil des Tonminerals an dem Granulat insgesamt bei höchstens 20 Gew.-%, bevorzugt bei höchstens 15 Gew.-%, weiter bevorzugt bei höchstens 10 Gew.-%, ebenfalls bevorzugt bei höchstens 5 Gew.-% liegt. Desweiteren ist es möglich, dass der Anteil des Tonminerals an dem Granulat bei mindestens 0,01 Gew.-%, bevorzugt mindestens 1 Gew.-%, weiter bevorzugt bei mindestens 3 Gew.-% und insbesondere bevorzugt bei mindestens 5 Gew.-% liegt.

Das Granulat der vorliegenden Erfindung weist bevorzugt eine mittlere Größe von 1 bis 7 mm, bevorzugter von 2 bis 6 mm und besonders bevorzugt von 3 bis 5 mm auf. Die "mittlere Größe" wird dabei über fraktioniertes Absieben bestimmt. Besonders bevorzugt liegt dabei eine monomodale Verteilung vor.

Es ist weiter bevorzugt, dass das Granulat der vorliegenden Erfindung einen D50- Wert von mindestens 0,5 mm, bevorzugt mindestens 1 mm, bevorzugter mindestens 1,5 mm und am meisten bevorzugt mindestens 2 mm aufweist.

Desweiteren ist es im Rahmen der vorliegenden Erfindung bevorzugt, wenn das Granulat eine spezifische Oberfläche nach BET von 150 bis 600 $m^2/g$, bevorzugt 200 bis 500 $m^2/g$ und am meisten bevorzugt von 250 bis 400 $m^2/g$ aufweist.

Die Herstellung solcher Granulate erfolgt nach an sich bekannten Prozessen einer Rollgranulation auf einem Granulierteller, einer Strangpressung oder einer Granulation in einer mechanisch erzeugten Wirbelschicht, gefolgt von einem Trocknungsprozess und einem Sinterprozess. Insbesondere bevorzugt ist hier der Einsatz einer Granulation mit Hilfe einer mechanisch erzeugten Wirbelschicht in einem Intensivmischer, wie er z. B. von der Firma Eirich, Hartheim, Deutschland, hergestellt wird. Alternative Rühraggregate sind beispielsweise von den Firmen Lödige oder Ballestra erhältlich. Bei der Granulierung wird der mindestens eine Zeolith mit dem mindestens einen Binder vorgelegt und dann mit Wasser granuliert. Nach dem Trocknungsprozess folgt ein Absieben auf die Zielteilchengröße, wonach bei mindestens 300 °C und höchstens 1000 °C, bevorzugt zwischen 500 °C und 800 °C mindestens 10 Minuten und höchstens 5h gesintert wird.

Bevorzugt weisen die Granulate einen möglichst geringen Anteil an Mesoporen (Porendurchmesser < 50 nm) und einen möglichst großen mittleren Porendurchmesser auf (D. Bathen, M. Breitbach: Adsorptionstechnik, Springer Verlag 2001, 13, s. hierzu auch die WO 2009-109529). Erwünscht ist ein hoher Anteil an Makroporen). Die Porosität der Granulate lässt sich beispielsweise mittels Stickstoffporosimetrie bestimmen. Nach der BJH-Methode lassen sich dabei üblicherweise Poren mit Durchmessern von 1,7 bis 300 nm erfassen (I.P. Barret, L.G. Joyner, P.P. Halenda, J. Am. Chem. Soc. 73, 1951, 373).

Um den Anteil an Mesoporen und Makroporen zu bestimmen, setzt man üblicherweise die Hg-Porosimetrie ein (DIN 66133, Meso- und Makroporenverteilung von 900 $\mu$m - 3 nm), s. hierzu auch A.W. Adamson, A.P. Gast, Physical Chemistry on Surfaces, Wiley (1997) pp 577 und F. Ehrburger-Dolle, Fractal Characteristics of Silica Surfaces and Aggregates in The Surface Properties of Silicas, Editor A.P. Legrand, Wiley (1998) pp 105.

Quecksilber wird als nicht benetzende Flüssigkeit in die Poren gedrückt, wobei zuerst die großen und erst bei hohen Drücken die kleineren Poren gefüllt werden. Beschrieben wird die Abhängigkeit von Druck und Porenradius durch die sog. Washburn-Gleichung (s. obige Zitate).

Neben der Porenradienverteilung lassen sich auf diese Weise das Porenvolumen, die Porosität und die spezifische Oberfläche der Probe bestimmen. Die Quecksilberporosimetrie kann als ergänzendes Verfahren zur Gassorption betrachtet werden.

Weiterhin ist es bevorzugt, dass die Bindekapazität für die organischen (Ziel)Moleküle, wie z. B. Ethanol, Aceton oder Butanol aus der Gasphase mindestens 80%, besonders bevorzugt 90% der Bindekapazität, bezogen auf die Zeolith-Einwaage, beträgt, wie sie für das entsprechende Ausgangspulver des Zeoliths messbar ist. Die erfindungsgemäßen Granulate adsorbieren bevorzugt höchstens 20% (w/w) mehr Wasser im Vergleich zu ungranulierten Zeolithen.

Desweiteren ist es im Rahmen der vorliegenden Erfindung bevorzugt, wenn das Granulat einen Anteil an einem metallischen Werkstoff umfasst, der besonders bevorzugt im Bereich von 0,001 bis 30 Gew.-%, bevorzugter 0,01 bis 20 Gew.-% und besonders bevorzugt im Bereich von 5 bis 10 Gew.-% liegt.

Eine Beimischung von metallischem Werkstoff hat den Vorteil, dass adsorbierte Moleküle effektiver ad- und desorbiert werden können, d.h. dass vor allem die Adsorptions - und/oder Desorptionszeit verringert werden kann. Dadurch kann beispielsweise die Taktzeit verkürzt werden. Hierdurch lässt sich zudem die Größe der Adsorptionssäule verringern, wodurch wiederum der weitere Vorteil erzielt wird, dass eine geringere Schütthöhe eingestellt werden kann und so der Druckverlust vermindert wird. Dadurch erfordert das Verfahren insgesamt auch weniger Energie.

Desweiteren hat eine Beimischung von metallischem Werkstoff den Vorteil, dass Granulate, die eine Beimischung von metallischem Werkstoff enthalten, eine höhere Stabilität aufweisen. Dies ist insbesondere für den Einsatz von Adsorbens-Granulaten im up-flow Betrieb, also einer aufwärtsgerichteten Gasströmung, von Vorteil, da eine Fluidisierung der Partikel erschwert wird.

Die oben genannten Vorteile, die durch eine Beimischung von bestimmten Mengen an metallischem Werkstoff erreicht werden, können neben den erfindungsgemäßen Granulaten bei jeglicher Art von Verbundmaterial wie insbesondere Granulaten erreicht werden, die für Adsorptions- und/oder Desorptionsvorgänge eingesetzt werden.

Mögliche Verbundmaterialien, bei denen eine Beimischung von metallischem Werkstoff zu einem der oben genannten Vorteile führt sind Verbundmaterialien umfassend mindestens einen Zeolithen.

Grundsätzlich können bei diesen Verbundmaterialien alle Zeolithe eingesetzt werden, die dem Fachmann als geeignet bekannt sind. Die Zeolithe könne zudem in Reinform oder als Mischung von zwei oder mehr Zeolithen eingesetzt werden. Bevorzugte sind hydrophobe Zeolithe, wobei Zeolithe mit einem $SiO_2/Al_2O_3$-Verhältnisse von mindestens 100, bevorzugt von mindestens 200, noch bevorzugter von mindestens 500 und ganz besonders bevorzugt von mindestens 800 besonders geeignet sind. Besonders bevorzugte Zeolithe werden ausgewählt aus der Gruppe bestehend aus Silicalit, beta-Zeolith, Mordenit, Y-Zeolith, MFI-Zeolith, Ferrierit, dealuminierter, ultrastabiler Zeolith Y (USY) und Erionit. Außerdem können Mischungen der vorgenannten Zeolithe in beliebigen Verhältnissen eingesetzt werden.

Die Zeolithe werden in Form eines Zeolithpulvers eingesetzt und weisen besonders bevorzugt eine Partikelgröße zwischen 0,5 und 100 $\mu$m auf, bevorzugt zwischen 1 und 50 $\mu$m und besonders bevorzugt zwischen 5 und 25 $\mu$m.

Der Anteil des Zeoliths bzw. der Zeolithe liegt dabei bevorzugt bei 1 bis 99 Gew.-% (bezogen auf das Gesamtgewicht des Verbundmaterials oder Granulats), bevorzugter bei 10 bis 90 Gew.-%, weiter bevorzugt bei 20 bis 85 Gew.-%, ebenfalls bevorzugter bei 40 bis 80 Gew.-% und am meisten bevorzugt bei 50 bis 75 Gew.-%.

In einer besonders bevorzugten Ausführungsform umfasst das Verbundmaterial zudem ein Bindemittel. Als Bindemittel können alle Substanzen eingesetzt werden, die dem Fachmann als geeignet bekannt sind. Besonders bevorzugte Bindemittel sind Tonminerale, oder siliciumhaltige Substanzen. Bei den Tonmineralen handelt es sich bevorzugt um Schichtsilikate, besonders bevorzugt um smektitische Schichtsilikate oder um ein Mineral der Talc-Pyrophyllith-Gruppe oder um Mischungen daraus. Bei den siliciumhaltigen Substanzen handelt es sich bevorzugt um Siliciumdioxid, derivatisiertes Siliciumdioxid, Fällungskieselsäure, Wasserglas oder Kieselsol. Es können jedoch auch Bindemittel aus der Gruppe der Tonminerale und/oder aus der Gruppe der siliciumhaltigen Substanzen eines Verbundmaterials eingesetzt werden. Auch Mischungen verschiedener Bindemittel sind möglich.

Der Anteil des Bindemittels liegt dabei bevorzugt bei 0,01 bis 45 Gew.-% (bezogen auf das Gesamtgewicht des Verbundmaterials oder Granulats), bevorzugter bei 1 bis 40 Gew.-%, weiter bevorzugt bei 2 bis 35 Gew.-%, ebenfalls bevorzugter bei 3 bis 30 Gew.-% und am meisten bevorzugt bei 5 bis 20 Gew.-%.

Das Verbundmaterial enthält einen metallischen Werkstoff. Dabei handelt es sich bevorzugt um Metalle oder Metalllegierungen, bevorzugt um Bronze, Gold, Zinn, Kupfer oder Edelstähle d.h. Stähle mit einem geringen Anteil an Schwefel und Phosphor. Besonders bevorzugt ist Stahl mit der Werkstoffnummer 1.431. Der metallische Werkstoff liegt bevorzugt in Form eines Drahtverbunds, einer mit Löchern versehenen Platte, in Form von Spänen oder Metallwolle oder in Pulverform vor. Besonders bevorzugt ist die Pulverform.

Die Größe der Metallpulverpartikel liegt dabei bevorzugt im Bereich von 25 bis 150 $\mu$m, bevorzugter im Bereich von 45 bis 75 $\mu$m. Besonders bevorzugt ist ein Metallpulver mit folgender Partikelgrößenverteilung: Partikel > 150$\mu$m:

0 Gew.-%, Partikel 45-75 μm 80 Gew.-% und Partikel > 75 und ≤ 150 μm: 2 Gew.-%.

Ein Verfahren, nach dem besonders vorteilhafte Verbundmaterialien hergestellt werden können, umfasst die folgenden Schritte

a) Bereitstellen einer Zusammensetzung umfassend mindestens einen Zeolith;
b) Zugabe mindestens eines metallischen Werkstoffs zu der Zusammensetzung;
c) In-Kontakt-Bringen der Zusammensetzung gemäß Schritt b) mit mindestens einem Granuliermittel wie beispielsweise Wasser;
d) Ausformen eines Verbundmaterials.

Als Granuliermittel können alle Granuliermittel eingesetzt werden, die dem Fachmann als geeignet bekannt sind. Bevorzugte Granuliermittel sind Wasser, Wasserglas, wässrige Lösungen aus Polymeren wie z.B. Polyacrylaten, Polyethylenglykolen; Alkane, Mischungen aus Alkanen, Pflanzenöle oder Biodiesel. Das Granuliermittel wird desweiteren bevorzugt in einem Anteil von 0,1 bis 60 Gew.-% (bezogen auf die Gesamtmenge der Zusammensetzung), bevorzugter von 1 bis 50 Gew.-%, weiter bevorzugt von 5 bis 40 Gew.-%, insbesondere bevorzugt von 10 bis 35 Gew.-% und am meisten bevorzugt von 15 bis 30 Gew.-% eingesetzt.

Für die im Rahmen des Verfahrens genannten Begriffe wie "Zeolith" und "metallischer Werkstoff" gelten die vorstehend genannten Definitionen und bevorzugten Ausführungsformen.

Im Rahmen eines besonders bevorzugten Verfahrens wird der Zusammensetzung vor der Zugabe des Granuliermittels zudem ein Bindemittel zugegeben. Bevorzugte Bindemittel sind ebenfalls vorstehend beschrieben worden.

Die Herstellung wird nachfolgend beispielhaft für Granulate weiter erläutert. Die Übertragung auf die Herstellung anderer Formkörper ist dem Fachmann auf diesem Gebiet bekannt.

Herstellung von Granulaten

Die Granulation erfolgt unter Verwendung der Zusammensetzung von hydrophobem Zeolith, Tonmineralen oder siliciumhaltigen Substanzen und Metallpulver. Die Herstellung solcher Granulate erfolgt nach den bekannten Prozessen einer Rollgranulation, einer Strangpressung oder einer Granulation in einer mechanisch erzeugten Wirbelschicht, gefolgt von einem Trocknungsprozess und einem Sinterprozess. Insbesondere bevorzugt ist hier der Einsatz einer Granulation mit Hilfe einer mechanisch erzeugten Wirbelschicht in einem Intensivmischer, wie er z. B. von der Firma Eirich, Hartheim, Deutschland, hergestellt wird. Alternative Rühraggregate sind beispielsweise von den Firmen Lödige oder Ballestra erhältlich. Bei der Granulierung wird der Zeolith mit dem Bindemittel und Metallpulver vorgelegt und dann mit Wasser granuliert. Nach dem Trocknungsprozess folgt ein Absieben auf die Zielteilchengröße, wonach bei mindestens 500°C mindestens 30 Minuten gesintert wird.

Bevorzugte Granulate sind durch D50-Teilchengrößen von mindestens 0,5 mm, bevorzugt > 1 mm, besonders bevorzugt > 1,5 mm gekennzeichnet. Weiterhin sind sie dadurch gekennzeichnet, dass die Bindekapazität für die niedermolekularen Zielmoleküle, wie z. B. Ethanol, Aceton oder Butanol, aus der Gasphase mindestens > 80%, besonders bevorzugt > 90% der Bindekapazität, bezogen auf die Zeolith-Einwaage, beträgt, wie sie für das entsprechende Ausgangspulver messbar ist. Bevorzugte Granulate adsorbieren maximal 20%(w/w) mehr Wasser und bevorzugt weniger Wasser im Vergleich zu den ungranulierten Zeolithen.

Dies lässt sich durch die Auswahl der Tonminerale und die Prozessführung gezielt einstellen. So sind bei den Tonmineralen, smektitische Tone bevorzugt, besonders Montmorillonite. Ganz besonders bevorzugt sind Montmorillonite mit einem Anteil von einwertigen Ionen an ihrer Kationenaustauschkapazität von weniger als 50%. Untersuchungen legen nahe, dass ein Calciumbentonit sich besonders günstig auf die Erzielung einer offenporigen Struktur in dem Zeolithgranulat einstellen lässt und damit das Eindringen der Zielmoleküle gegenüber solchen Granulaten begünstigt, bei denen mit einem natürlichen oder durch Sodaaktivierung erhältlichen Natriumbentonit gearbeitet wurde.

Statt Tonminerale können auch siliciumhaltige Substanzen eingesetzt werden. Auch Mischungen aus siliciumhaltigen Substanzen und Tonmineralen sind möglich.

Diese bevorzugten Verbundmaterialien umfassend einen metallischen Werkstoff, wie sie vorstehend beschrieben wurden, können besonders vorteilhaft eingesetzt werden für Adsorption und Desorption.

Diese Verfahren, für die der Einsatz der vorstehend näher beschriebenen Verbundmaterialien besonders vorteilhaft ist, werden nachfolgend näher erläutert.

a. Adsorption

Bei der Adsorption durchströmt ein Gasstrom, der die flüchtigen organischen Verbindungen enthält, eine oder mehrere Adsorptionsapparate, bevorzugt Festbettsäulen, die das Verbundmaterial enthalten. Dabei wird mindestens eine der flüchtigen organischen Verbindungen aus dem Gasstrom durch Adsorption entfernt.

Bevorzugt wird der Gasstrom durch Gas-Stripping einer wässrigen Lösung, bevorzugt einer Fermentationslösung, mit den flüchtigen organischen Verbindungen angereichert. Besonders bevorzugt erfolgt dieses Anreichern in-situ, d.h. während die flüchtigen organischen Verbindungen gebildet werden.

b. Desorption

Die Desorption erfolgt bei reduziertem Druck. Der Absolutdruck liegt bevorzugt unterhalb von 800 mbar , bevorzugter unterhalb von 500 mbar, noch bevorzugter unterhalb von 200 mbar und ganz besonders bevorzugt unterhalb von 100 mbar.

Bei Verwendung des Verbundmaterials muss bevorzugt keine Wärme zusätzlich eingetragen werden, da nach der Adsorption das Material bereits Wärme gespeichert hat. Es ist jedoch ebenfalls möglich Wärme über magnetische Induktion einzutragen.

Besonders geeignet ist die Verwendung der vorstehend näher beschriebenen Verbundmaterialien für die Adsorption und/oder Desorption von organischen Molekülen. Bei den besonders vorteilhaft zu adsorbierenden organischen Molekülen zählen Moleküle aus einer oder mehreren der Substanzklassen der Alkohole, Ketone, Aldehyde, organische Säuren, Ester oder Ether. Besonders vorteilhaft können fermentativ produzierbare Substanzen wie Ethanol, Butanol oder Aceton oder Mischungen daraus adsorbiert und/oder desorbiert werden.

In einem weiteren Aspekt betrifft die vorliegende Erfindung die Verwendung des Granulats wie vorstehend näher definiert zur Adsorption von organischen Molekülen aus Gasen und Flüssigkeiten sowie ein Verfahren zur Adsorption von organischen Molekülen aus Gasen und Flüssigkeiten umfassend die folgenden Schritte:

> a) In-Kontakt-Bringen eines Granulats wie vorstehend definiert mit einer Flüssigkeit oder einem Gas enthaltend mindestens ein organisches Molekül;
> b) Desorption des mindestens einen organischen Moleküls von dem Granulat.

Das In-Kontakt-Bringen des Granulats mit der Flüssigkeit oder dem Gas kann dabei auf jede Weise erfolgen, die dem Fachmann als für den erfindungsgemäßen Zweck geeignet bekannt ist. In einer besonders bevorzugten Ausführungsform wird das Granulat in einer Säule angeordnet und das Gas oder die Flüssigkeit durch diese Säule geleitet. Ebenfalls bevorzugte Ausführungsformen der vorliegenden Erfindung betreffen das In-Kontakt-Bringen des Granulats mit der Flüssigkeit oder dem Gas in einem Wirbelbett.

Bei der "Flüssigkeit" handelt es sich im Rahmen der vorliegenden Erfindung bevorzugt um eine wässrige Lösung. In einer besonderen Ausführungsform handelt es sich um eine Fermentationsflüssigkeit. Besonders geeignet sind Fermentationsflüssigkeiten, die durch Fermentation eines geeigneten Fermentationsmediums, welches eine Kohlenstoffquelle (z.B. Glucose) und gegebenenfalls eine Stickstoffquelle (z.B. Ammoniak) enthält, mit beispielsweise einer oder mehreren Hefen, Bakterien oder Pilzen entstanden ist. Besonders bevorzugt sind die Hefen *Saccharomyces cerevisiae, Pichia stipitis,* oder Mikroorganismen mit ähnlichen Fermentationseigenschaften wie beispielsweise *Pichia segobiensis, Candida shehatae, Candida tropicalis, Candida boidinii, Candida tenuis, Pachysolen tannophilus, Hansenula polymorpha, Candida famata, Candida parapsilosis, Candida rugosa, Candida sonorensis, Issatchenkia terricola, Kloeckera apis, Pichia barkeri, Pichia cactophila, Pichia deserticola, Pichia norvegensis, Pichia membranaefaciens, Pichia Mexicana, Torulaspora delbrueckii, Candida bovina, Candida picachoensis, Candida emberorum, Candida pintolopesii, Candida thermophila, Kluyveromyces marxianus, Kluyveromyces fragilis, Kazachstania telluris, Issatchenkia orientalis, Lachancea thermotolerans, Clostridium thermocellum, Clostridium thermohydrosulphuricum, Clostridium thermosaccharolyticium, Thermoanaerobium brockii, Thermobacteroides acetoethylicus, Thermoanaerobacter ethanolicus, Clostridium thermoaceticum, Clostridium thermoautotrophicum, Acetogenium kivui, Desulfotomaculum nigrificans,* und *Desulfovibrio thermophilus, Thermoanaerobacter tengcongensis, Bacillus stearothermophilus und Thermoanaerobacter mathranii.* Geeignete Fermentationsmedien sind Medien auf Basis von Wasser, die biologische Rohstoffe wie Holz, Stroh in unaufgeschlossener Form oder nach Aufschließen durch beispielsweise Enzyme enthalten. Als biologische Rohstoffe können desweiteren Cellulose oder Hemicellulose oder andere Polysaccharide eingesetzt werden, die ebenfalls entweder unaufgeschlossen, also direkt eingesetzt werden oder zuvor durch Enzyme oder anderweitige Vorbehandlung in kleinere Zuckereinheiten gespalten werden. Es ist jedoch im Rahmen der vorliegenden Erfindung ebenfalls möglich jegliche Art von Flüssigkeit oder Mischungen von zwei oder mehr Flüssigkeiten einzusetzen, die die zu adsorbierenden organischen Moleküle enthalten.

Bei dem "Gas" handelt es sich im Rahmen der vorliegenden Erfindung bevorzugt um Luft oder einen oder mehrere Einzelbestandteile von Luft, wie Stickstoff, Kohlendioxid und/oder Sauerstoff. Bei dem "organischen Molekül" kann es sich prinzipiell um jedes organische Molekül handeln, speziell um jedes organische Molekül, das üblicherweise in Fermentationsflüssigkeiten enthalten ist. Bevorzugt werden die erfindungsgemäßen Granulate zur Adsorption von niedermolekularen Molekülen mit einem Molekulargewicht unter 10.000 Dalton, bevorzugt unter 1.000 Dalton, besonders bevorzugt unter 200 Dalton, eingesetzt. Besonders geeignet ist die Verwendung der erfindungsgemäßen Granulate zur Adsorption von niedermolekularen Alkoholen wie Ethanol, Butanol einschließlich 1-Butanol, 2-Butanol, Isobutanol, t-Butanol, Propandiol einschließlich 1,2-Propandiol, 1,3-Propandiol, Butandiol einschließlich 1,4-Butandiol, 2,3-Butandiol, von Ketonen wie Aceton, und/oder von organischen Säuren wie Essigsäure, Ameisensäure, Buttersäure, Milchsäure, Citronensäure, Bernsteinsäure.

In einer bevorzugten Ausführungsform des Verfahrens der vorliegenden Erfindung wird Schritt a) der vorstehend näher beschriebenen wurde maximal so lange durchgeführt bis die Adsorptionskapazität erschöpft ist. Bevorzugt ist dabei eine Ausführungsform der erfindungsgemäßen Verwendung, bei dem ein Gasstrom in einem Kreislauf durch die Flüssigkeit geführt wird, die mindestens ein organisches Molekül enthält, dieser dann mit dem Granulat in Kontakt gebracht wird und danach in die Flüssigkeit rückgeführt wird.

In einer bevorzugten Ausführungsform des erfindungsgemäßen Verfahrens ist das Granulat in einer Säule angeordnet. Die Anordnung des Granulats in einer Säule setzt den Gegendruck, den das Granulat der Flüssigkeit oder dem Gas entgegensetzt, weiter herunter. Zudem wird der Abrieb des Granulats stark vermindert.

In einer weiteren bevorzugten Ausführungsform wird Schritt a) und/oder b) bei einer Temperatur von 20 bis 35 °C durchgeführt.

Die "Desorption" des mindestens einen organischen Moleküls gemäß Schritt b) kann auf jede Art und Weise erfolgen, die dem Fachmann als geeignet bekannt ist. Bevorzugt ist dabei eine Desorption durch Erhöhen der Temperatur des Granulats und/oder Absenkung des Umgebungsdrucks bis hin zum Vakuum. In einer bevorzugten Ausführungsform wird die Temperatur bei Durchführung des Schritts b) auf 35 bis 70 °C, bevorzugter 40 bis 55 °C und am bevorzugtesten 45 bis 50 °C erhöht. Nach der Desorption kann das erfindungsgemäße Granulat wiederholt zur Adsorption von organischen Molekülen aus Gas(en) und/oder Flüssigkeit(en) eingesetzt werden.

**Messmethoden**

Die physikalischen Eigenschaften der Zeolithe, Tonminerale und Granulate wurden mit den folgenden Verfahren bestimmt:

Bestimmung des Montmorillonitgehalts über die Methylenblauadsorption

Der Methylenblauwert ist ein Maß für die innere Oberfläche der Tonmaterialien.

a) Herstellung einer Tetranatriumdiphosphat-Lösung

5,41 g Tetranatriumdiphosphat werden auf 0,001 g genau in einen 1000 ml Messkolben eingewogen und unter Schütteln bis zur Eichmarke mit dest. Wasser aufgefüllt.

b) Herstellung einer 0,5%-igen Methylenblaulösung

In einem 2000 ml Becherglas werden 125 g Methylenblau in ca. 1500 ml dest. Wasser gelöst. Die Lösung wird abdekantiert und auf 25 l mit dest. Wasser aufgefüllt.

0,5 g feuchter Testbentonit mit bekannter innerer Oberfläche werden in einem Erlenmeyerkolben auf 0,001 g genau eingewogen. Es werden 50 ml Tetranatriumdiphosphatlösung zugegeben und die Mischung 5 Minuten zum Sieden erhitzt. Nach dem Abkühlen auf Raumtemperatur werden 10 ml 0,5 molare $H_2SO_4$ zugegeben und 80 bis 95% des zu erwartenden Endverbrauchs an Methylenblaulösung zugegeben. Mit dem Glasstab wird ein Tropfen der Suspension aufgenommen und auf ein Filterpapier gegeben. Es bildet sich ein blau-schwarzer Fleck mit einem farblosen Hof. Es wird nun in Portionen von 1 ml weitere Methylenblaulösung zugegeben und die Tüpfelprobe wiederholt. Die Zugabe erfolgt solange, bis sich der Hof leicht hellblau färbt, also die zugegebene Methylenblaumenge nicht mehr vom Testbentonit absorbiert wird.

c) Prüfung von Tonmaterialien

Die Prüfung des Tonmaterials wird in der gleichen Weise durchgeführt wie für den Testbentonit. Aus der verbrauchten Menge an Methylenblaulösung lässt sich die innere Oberfläche des Tonmaterials berechnen.

381 mg Methylenblau/g Ton entsprechen nach diesem Verfahren einem Gehalt von 100% Montmorillonit.

BET-Oberfläche/Porenvolumen nach BJH und BET:

Die Oberfläche und das Porenvolumen wurden mit einem vollautomatischen Stickstoffporosimeter der Firma Micromeritics Typ ASAP 2010 bestimmt.

Die Probe wird im Hochvakuum auf die Temperatur von flüssigem Stickstoff abgekühlt. Anschließend wird kontinuierlich Stickstoff in die Probenkammern dosiert. Durch die Erfassung der adsorbierten Gasmenge als Funktion des Druckes wird bei konstanter Temperatur eine Adsorptionsisotherme ermittelt. In einem Druckausgleich wird das Analysengas schrittweise entfernt und eine Desorptionsisotherme aufgenommen.

Zur Ermittlung der spezifischen Oberfläche und der Porosität nach der BET-Theorie werden die Daten gemäß DIN 66131 ausgewertet.

Das Porenvolumen wird ferner aus den Messdaten unter Anwendung der BJH-Methode ermittelt (I.P. Barret, L.G. Joyner, P.P. Halenda, J. Am. Chem. Soc. 73, 1951, 373). Bei diesem Verfahren werden auch Effekte der Kapillarkondensation berücksichtigt. Porenvolumina bestimmter Volumengrößenbereiche werden durch Aufsummieren inkrementeller Porenvolumina bestimmt, die aus der Auswertung der Adsorptionsisotherme nach BJH erhalten werden. Das Gesamtporenvolumen nach BJH-Methode bezieht sich auf Poren mit einem Durchmesser mit 1,7 bis 300 nm.

Der Anteil an Mesoporen und Makroporen wurde durch die Hg-Porosimetrie bestimmt (DIN 66133, Meso- und Makroporenverteilung von 900 $\mu$m - 3 nm), s. hierzu auch A.W. Adamson, A.P. Gast, Physical Chemistry on Surfaces, Wiley (1997) pp 577 und F. Ehrburger-Dolle, Fractal Characteristics of Silica Surfaces and Aggregates in The Surface Properties of Silicas, Editor A.P. Legrand, Wiley (1998) pp 105.

Bestimmung Kationenaustauschkapazität (CEC) von Tonen

Prinzip: Der Ton wird mit einem großen Überschuss an wässriger $NH_4Cl$-Lösung behandelt, ausgewaschen und die auf dem Ton verbliebene $NH_4^+$-Menge mittels Elementaranalyse bestimmt.

$$Me^+(Ton)^- + NH_4^+ - NH_4^+(Ton)^- + Me^+$$

(Me$^+$ = H$^+$, K$^+$, Na$^+$, 1/2 Ca$^{2+}$, 1/2 Mg$^{2+}$....)

Geräte: Sieb, 63 $\mu$m; Erlenmeyer-Schliffkolben, 300 ml; Analysenwaage; Membranfilternutsche, 400 ml; Cellulose-Nitrat-Filter, 0,15 $\mu$m (Fa. Sartorius); Trockenschrank; Rückflusskühler; Heizplatte; Destillationseinheit, VAPODEST-5 (Fa. Gerhardt, No. 6550); Messkolben, 250 ml; Flammen-AAS Chemikalien: 2N $NH_4Cl$-Lösung Neßlers-Reagens (Fa. Merck, Art.Nr. 9028); Borsäure-Lösung, 2%-ig; Natronlauge, 32%-ig; 0,1 N Salzsäure; NaCl-Lösung, 0,1%-ig; KCl-Lösung, 0,1%-ig.

Durchführung: 5 g Ton werden durch ein 63 $\mu$m-Sieb gesiebt und bei 110°C getrocknet. Danach werden genau 2 g auf der Analysenwaage in Differenzwägung in den Erlenmeyer-Schliffkolben eingewogen und mit 100 ml 2N $NH_4Cl$-Lösung versetzt. Die Suspension wird unter Rückfluss eine Stunde lang gekocht. Bei stark $CaCO_3$-haltigen Bentoniten kann es zu einer Ammoniak-Entwicklung kommen. In diesen Fällen muss solange $NH_4Cl$-Lösung zugegeben werden, bis kein Ammoniak-Geruch mehr wahrzunehmen ist. Eine zusätzliche Kontrolle kann mit einem feuchten Indikator-Papier durchgeführt werden. Nach einer Standzeit von ca. 16 h wird der $NH_4^+$-Bentonit über eine Membranfilternutsche abfiltriert und bis zur weitgehenden Ionenfreiheit mit vollentsalztem Wasser (ca. 800 ml) gewaschen. Der Nachweis der Ionenfreiheit des Waschwassers wird auf $NH_4^+$-Ionen mit dem dafür empfindlichen Neßlers-Reagens durchgeführt. Die Waschzahl kann je nach Tonart zwischen 30 Minuten und 3 Tagen variieren. Der ausgewaschene $NH_4^+$-Ton wird vom Filter abgenommen, bei 110°C 2 h lang getrocknet, gemahlen, gesiebt (63 $\mu$m-Sieb) und nochmals bei 110°C 2 h lang getrocknet. Danach wird der $NH_4^+$-Gehalt des Tons mittels Elementaranalyse bestimmt.

Berechnung der CEC: Die CEC des Tons wurde in herkömmlicher Weise über den $NH_4^+$-Gehalt des $NH_4^+$-Tons, der über Elementaranalyse des N-Gehalts ermittelt wurde, bestimmt. Hierzu wurde das Gerät Vario EL 3 der Firma Elementar- Heraeus, Hanau, DE, nach den Angaben des Herstellers eingesetzt. Die Angaben erfolgen in mval/100 g Ton (meq/100g).

Beispiel: Stickstoff-Gehalt = 0,93%;
Molekulargewicht: N = 14,0067 g/mol

$$CEC = \frac{0,93 \times 1000}{14,0067} = 66,4 \text{ mVal/100g}$$

CEC = 66,4 meq/100 g $NH_4^+$-Bentonit

Bestimmung des Wassergehalts

Der Wassergehalt bei 105°C wird unter Verwendung der Methode DIN/ISO-787/2 ermittelt.

Bestimmung des pH-Wertes einer Bentonitprobe

2 g der Probe werden in 98 ml destilliertem Wasser dispergiert. Danach wird mit einer kalibrierten Glaselektrode der pH-Wert bestimmt.

Glühverlust

In einem geglühten und gewogenen Porzellantiegel mit Deckel wird ca. 1 g getrocknete Probe auf 0,1 mg genau eingewogen und 2 h lang bei 1000°C im Muffelofen geglüht. Danach wird der Tiegel im Exsikkator abgekühlt und ausgewogen.

Bestimmung des Trockensiebrückstandes

Etwa 50 g des zu untersuchenden lufttrockenen Tonmaterials werden auf einem Sieb der entsprechenden Maschenweite eingewogen. Das Sieb wird an einen Staubsauger angeschlossen, der über ein unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen gröberen Anteile durch Differenzwägung ermittelt.

Bestimmung des Schüttgewichts

Ein bei der 1000 ml Markierung abgeschnittener Messzylinder wird gewogen. Dann wird die zu untersuchende Probe mittels eines Pulvertrichters so in einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

Charakterisierung der eingesetzten Zeolithe

Die Zeolithe wurden mit folgenden Methoden charakterisiert:

| Parameter | Methode |
|---|---|
| Zeolithtyp | DIN EN 13925-1" und "DIN EN 13925-2" (Röntgendiffraktometrie) |
| Kristallinität | DIN EN 13925-1" und "DIN EN 13925-2" (Röntgendiffraktometrie) |
| Korngröße, $d_{50\%}$ $d_{90\%}$ | ISO 13320 Particle size analysis - Laser diffraction methods |
| BET-Oberfläche | DIN66131 |

Herstellung von Granulaten

Zur Herstellung der Granulate der Beispiele wurde ein Eirich Intensivmischer R02E (Firma Gustav Eirich, Hartheim, Deutschland) eingesetzt. Zur Herstellung von Granulaten wurden die Pulver vorgelegt, vorgemischt und über einen Trichter wurde nach und nach ein flüssiges Granulationsmittel gemäß den folgenden Beispielen zudosiert. Dabei wurde die niedrigste Einstellung für die Umdrehungsgeschwindigkeit des Tellers sowie die maximale Umdrehungsgeschwindigkeit für den Wirbler gewählt. Durch die Wahl der flüssigen Granuliermittel, deren Zugabemenge und Zugabegeschwindigkeit lassen sich die Teilchengrößen der feuchten Granulate steuern.

Bestimmung der Druckhärte (Bruchfestigkeit) der Granulate

Die Druckhärte (Bruchfestigkeit) der Granulate wurde mit einem Tablettenhärtetester 8M der Fa. Dr. Schleuninger Pharmatron AG getestet. Hierzu wurden einzelne Granulate mit einer Pinzette in die Vertiefung zwischen den Backen des Testgerätes gelegt. Für den Test wurde mit einer konstanten Vorschubgeschwindigkeit von 0,7 mm/s gearbeitet, bis der Druck ansteigt. Dann wurde ein konstanter Lastanstieg von 250 N/s eingestellt. Die Testergebnisse können auf 1 N genau angegeben werden.

**Beispiele**

Die Erfindung wird durch die nachfolgenden Beispiele näher beschrieben und verdeutlicht. Es wird dabei betont, dass die Beispiele allein veranschaulichenden Zwecken dienen und in keiner Weise begrenzend oder beschränkend für die erfindungsgemäße Lehre sind.

Die erfindungsgemäßen Zeolith-Granulate in den folgenden Beispielen werden durch eine Granulation mit Bentonit und nachfolgendem Sintern hergestellt. Im Folgenden werden die als Bindemittel eingesetzten Tonminerale beschrieben.

Charakterisierung der als Bindemittel für die Zeolith-Granulate eingesetzten Tonminerale

Zur Granulation der Zeolithe wurden folgende Bentonite eingesetzt: Bentonit 1 ist ein natürlicher Calcium-/Natrium-Bentonit. Bentonit 2 wurde durch Vermengen von Bentonit 1 mit 4,3 Gew.-% Soda, anschließendem Verkneten, Trocknen und Mahlen hergestellt). Die Bentonite weisen einen Trockensiebrückstand von < 15 Gew.-% auf einem Sieb der Maschenweite 45 $\mu$m und einen Rückstand von < 7 Gew.-% auf einem Sieb der Maschenweite 75 $\mu$m. Die Eigenschaften der als Ausgangsmaterialien verwendeten Bentonite 1 und 2 sind in Tabellen 1 und 2 dargestellt.

Tabelle 1: Eigenschaften der als Ausgangsmaterialien verwendeten Bentonite 1 und 2

| | Bentonit 1 | Bentonit 2 |
|---|---|---|
| Montmorillonitgehalt, bestimmt nach der Methylenblaumethode [%] | 75 | 78 |
| Kationenaustauschkapazität [meq/100 g] | 76 | 72 |
| Anteil der einwertigen Ionen in % der Gesamt-Kationenaustauschkapazität | 20 | 100 |
| Quellvolumen in destilliertem Wasser [ml/2 g] | 11 | > 15 |

Beispiel 1 (Granulate aus MFI-Zeolith mit einem $SiO_2/Al_2O_3$ Verhältnis von > 800 und Bentonit

Zur Herstellung der Granulate wurde ein MFI Zeolith der Süd-Chemie AG, Bitterfeld eingesetzt, der folgende Eigenschaften aufwies:

Tabelle 2: Charakteristische Eigenschaften des eingesetzten Zeoliths

| Parameter | Einheit | Wert |
|---|---|---|
| Zeolithtyp | | MFI (monoklin) |
| Kristallinität | % | 85 |
| Kristalline Verunreinigungen | % | n. d. |
| $Na_2O$-Gehalt | Gew.-% | 0,7 |
| $SiO_2/Al_2O_3$ molares Verhältnis | | >800 |
| Korngröße, d$_{50\%}$ d$_{90\%}$ | $\mu$m | 10 15 |
| BET-Oberfläche | m$^2\cdot$g$^{-1}$ | 340 |

Das Zeolithpulver wurde im Eirichmischer vorgelegt. Danach wurden in unterschiedlichen Ansätzen 10 Gew.-% und 20 Gew.-% von Bentonit 1 oder 2 zugesetzt und 2 Minuten vorgemischt. Anschließend wurde durch langsame Zugabe von Wasser auf Zielteilchengrößen von 0,4- 1,0 mm granuliert. Die nassen Granulate wurden jeweils 1 h bei 80 °C im Umlufttrockenschrank getrocknet, auf Teilchengrößen von 0,4 - 1 mm abgesiebt und dann 1 h in einem Muffelofen bei 600°C calciniert. Die Formulierungen sind in der folgenden Tabelle 3 angeführt, Charakterisierungsdaten in Tabelle 4. Ohne Zusatz von Bindern gelingt es nicht, das Zeolithpulver zu granulieren. In diesem Fall wird lediglich eine Paste erhalten.

Tabelle 3: Zeolith MFI-Granulat-Formulierungen

| Formulierung Nr. | Einwaage MFI-Zeolith (gem. Tabelle 2) [g] | Einwaage Bentonit 1 [g] | Einwaage Bentonit 2 [g] | Einwaage von Wasser zur Granulation [g] |
|---|---|---|---|---|
| 1 | 800 | -- | 200 | 320 |
| 2 | 900 | -- | 100 | 345 |
| 3 | 800 | 200 | -- | 292 |
| 4 | 900 | 100 | -- | 338 |

Tabelle 4: Eigenschaften der Zeolithgranulate

| Formulierung Nr. | Schüttgewicht [g/l] | BET-Oberfläche [m$^2$/g] |
|---|---|---|
| 1 | 671 | 275 |
| 2 | 602 | 298 |
| 3 | 649 | 322 |
| 4 | 580 | 294 |
| Vergleichswert Ausgangszeolith-Pulver | n.d. | 336 |

Von den Granulaten mit der Formulierung Nr. 4 wurde zusätzlich die Druckhärte (Bruchfestigkeit) bestimmt. Der Durchschnitt aus 20 Messungen ergab einen Wert von 26 ± 9 N.

Beispiel 2: Granulate aus MFI-Zeolith mit einem $SiO_2/Al_2O_3$ Verhältnis von 200

Analog zu Beispiel 2 wurden Granulate aus einem weiteren MFI Zeolith hergestellt. Dieser wies ein $SiO_2/Al_2O_3$-Verhältnis von 200 auf. Zur Herstellung der erfindungsgemäßen Granulate wurde hierbei wie in Beispiel 2 vorgegangen. Als Bindemittel für die erfindungsgemäßen Systeme wurden unterschiedliche Anteile des Bentonits 1 eingesetzt. In Vergleichsbeispielen wurde kein Bentonit zugesetzt, jedoch mit unterschiedlich verdünntem Kieselsol (Baykiesol, Lanxess) granuliert.

Tabelle 5: Formulierungen für Granulate mit dem Zeolith TZP 2524

| Formulierung Nr. | Zeolith Einwaage [g] | Einwaage Bentonit 1 [g] | Wasser zur Granulation | Wasser/ Baykiesol 1:1 | Wasser/ Baykiesol 5:1 |
|---|---|---|---|---|---|
| 5 | 900 | 100 | 336 | | |
| 6 | 800 | 200 | 324 | | |
| 7 | 850 | 150 | 316 | | |
| 8 | 850 | 150 | -- | | 322 |
| 9 | 900 | -- | -- | 373 | |

Beispiel 3: Adsorptionsversuche in wässriger Lösung

Jeweils 150 mg der erfindungsgemäßen Granulate (Formulierung 4 aus Tabelle 4) und des ungranulierten Zeolithpulvers werden in Eppendorf-Caps eingewogen. Anschließend werden jeweils 1,5 mL einer 5%(w/v)-igen Ethanol-Lösung zugegeben.
Anschließend wird in die Suspension für eine Stunde bei 23°C und 1200 rpm geschüttelt. Danach wird der Feststoff über Zentrifugation abgetrennt und der Überstand gaschromatografisch analysiert. Aus dem Vergleich der Ethanol-Konzentrationen vor und nach dem Versuch wird über eine Massenbilanz die Beladung des Feststoffs bestimmt. Tabelle 6 zeigt die erhaltenen Werte.

Tabelle 6: Adsorption von Ethanol in wässriger Phase

|  | Beladung [%(w/w)] | Relative Beladung [%] |
|---|---|---|
| Zeolithpulver | 8,63 +/- 0,09 | 100 |
| erfindungsgemäßes Granulat (Formulierung 4 aus Tabelle 4) | 7,26 +/- 0,05 | 84,1 |

Das gleiche Experiment für Butanol an Stelle von Ethanol ergibt die in Tabelle 7 dargestellten Ergebnisse.

Tabelle 7: Adsorption von Butanol in wässriger Phase

|  | Beladung [%(w/w)] | Relative Beladung [%] |
|---|---|---|
| Zeolithpulver | 10,33 +/- 0,11 | 100 |
| erfindungsgemäßes Granulat (Formulierung 4 aus Tabelle 4) | 9,61 +/- 0,09 | 93,0 |

Das gleiche Experiment für Aceton an Stelle von Butanol ergibt die in Tabelle 8 dargestellten Ergebnisse.

Tabelle 8: Adsorption von Aceton in wässriger Phase

|  | Beladung [%(w/w)] | Relative Beladung [%] |
|---|---|---|
| Zeolithpulver | 9,89 +/- 0,06 | 100 |
| erfindungsgemäßes Granulat (Formulierung 4 aus Tabelle 4) | 8,29 +/- 0,08 | 83,8 |

Beispiel 4: Adsorptionsversuche in der Gasphase

In einem geschlossenen System wird Stickstoff über eine Membranpumpe in eine mit reinem Ethanol gefüllte Waschflasche eingeblasen und über eine Glasfritte dispergiert. Das so mit Ethanol beladene Gas gelangt dann in eine Glassäule, welche 90 g der erfindungsgemäßen Granulate oder des ungranulierten Zeolithpulvers enthält. Nach dieser Säule wird das Gas über die Membranpumpe zurück in die Waschflasche gefördert. Aus Vorversuchen ist bekannt, dass innerhalb von 24 Stunden die maximale Beladung erreicht wird. Nach 24 Stunden wird der Versuch beendet und die Gewichtszunahme bestimmt. Unter Berücksichtigung der eingesetzten Trägermasse lässt sich die Kapazität des Materials berechnen. Tabelle 8 zeigt die erhaltenen Ergebnisse.

Tabelle 9: Adsorption von Ethanol in der Gasphase

|  | Beladung [%(w/w)] | Relative Beladung [%] |
|---|---|---|
| Zeolithpulver | 9,81 | 100 |
| erfindungsgemäßes Granulat (Formulierung 4 aus Tabelle 4) | 9,67 | 98,6 |

Das gleiche Experiment für Wasser an Stelle von Ethanol ergibt die in Tabelle 9 dargestellten Ergebnisse.

Tabelle 10: Adsorption von Wasser aus der Gasphase

|  | Beladung [%(w/w)] | Relative Beladung [%] |
|---|---|---|
| Zeolithpulver | 0,83 | 100% |
| erfindungsgemäßes Granulat (Formulierung 4 aus Tabelle 4) | 0,66 | 79% |

Beispiel 5: Herstellung von Zeolith-Granulaten mit Edelstahlpulver als Zusatzkomponente

Analog zu Beispiel 1 wurden Zeolith-Granulate mit Edelstahlpulver als Zusatzkomponente hergestellt, wobei die Granulation ebenso wie in Beispiel 1 mit Wasser erfolgte.

Hierzu wurde das Edelstahlpulver mit der Bezeichnung "54650 Stainless Steel Powder" von Krämer Pigmente, D- 88317 Aichstetten, Allgäu eingesetzt. Das Stahlpulver wies folgende charakteristische Eigenschaften auf (Tabelle 11) (laut Herstellerangaben):

Tabelle 11: Eigenschaften "5454650 Stainless Steel Powder"

| Schüttgewicht | 2.80 g/cm$^3$ |
|---|---|
| Fe-Gehalt | 99 Gew.-% |
| Gehalt an metallischem Eisen | 98.5 Gew.-% |
| O-Gehalt | 0.5 Gew.-% |
| C-Gehalt | 0.02 Gew.-% |
| Siebanalyse | |
| > 150 $\mu$m | 0 Gew.-% |
| 75 - 150 $\mu$m | 2 Gew.-% |
| >45 $\mu$m | 80 Gew.-% |

Als weitere Granulatkomponenten wurden derselbe MFI Zeolith wie in Beispiel 1 (SiO$_2$/Al$_2$O$_3$ Verhältnis von >800, siehe Tabelle 2) und Bentonit 1 eingesetzt.

Die Zusammensetzung der Granulationsformulierung ist in der folgenden Tabelle aufgeführt.

Tabelle 12: Zusammensetzung Granulationsformulierung

| Einwaage MFI-Zeolith (gem. Tabelle 2) [g] | Einwaage Bentonit 1 [g] | Einwaage Stahlpulver [g] | Einwaage von Wasser zur Granulation [g] |
|---|---|---|---|
| 800 | 100 | 100 | 342 |

Nach Trocknen und einer einstündigen Calcinierung bei 600 °C wurden stabile stahlhaltige Zeolithgranulate erhalten. Die Fraktion mit Teilchengrößen von 0,6 - 2 mm wies ein Schüttgewicht von 630 g/l auf.

**Patentansprüche**

1.   Granulat umfassend mindestens einen Zeolith und mindestens ein Tonmineral mit einer Kationenaustauschkapazität von höchstens 200 meq/100g, wobei der Anteil einwertiger Ionen an der Kationenaustauschkapazität des mindestens einen Tonminerals bei höchstens 50 % liegt, wobei der Zeolith ausgewählt ist aus der Gruppe bestehend aus $\beta$-Zeolith, Silicalit, Mordenit, USY, MFI Zeolith und deren Mischungen.

2.   Granulat gemäß Anspruch 1, wobei das mindestens eine Tonmineral ein Schichtsilikat ist.

3.   Granulat gemäß Anspruch 2, wobei das Schichtsilikat ein smektitisches Schichtsilikat oder ein Mineral der Talc-Pyrophyllith-Gruppe ist.

4.   Granulat gemäß Anspruch 2, wobei das Schichtsilikat eine natürliche oder künstliche Mischung aus einem Ton der Talc-Pyrophyllith-Gruppe und einem smektitischen Ton ist.

5.   Granulat gemäß einem der vorhergehenden Ansprüche, wobei der Anteil des mindestens einen Tonminerals bei höchstens 20 Gew.-% liegt.

6.   Granulat gemäß einem der vorhergehenden Ansprüche, wobei der Anteil an einwertigen Ionen an der Kationenaustauschkapazität des mindestens einen Tonminerals bei höchstens 45 % liegt.

7.   Granulat gemäß einem der vorhergehenden Ansprüche, wobei der Anteil an zweiwertigen Ionen an der Kationenaustauschkapazität des mindestens einen Tonminerals bei mindestens 40 % liegt.

8.   Granulat gemäß einem der vorhergehenden Ansprüche, wobei das Granulat eine spezifische Oberfläche nach BET von 200 bis 600 m$^2$/g aufweist.

**9.** Granulat gemäß einem der vorhergehenden Ansprüche, wobei das mindestens eine Tonmineral ein Verhältnis von zweiwertigen Ionen $Ca^{2+}$ und $Mg^{2+}$ zu einwertigen Ionen, als Summe von $Na^+ + K^+ + Li^+$ zwischen 1:2 und 20:1 aufweist.

**10.** Granulat gemäß einem der vorhergehenden Ansprüche, wobei das Granulat desweiteren einen Anteil an Metallpulver von 0,01 bis 20 Gew.-% umfasst.

**11.** Verwendung des Granulats wie in einem der Ansprüche 1 bis 10 definiert, zur Adsorption von organischen Molekülen aus Gasen und Flüssigkeiten.

**12.** Verfahren zur Adsorption von organischen Molekülen aus Gasen und Flüssigkeiten umfassend die folgenden Schritte:

a) In-Kontakt-Bringen eines Granulats wie in einem der Ansprüche 1 bis 10 definiert mit einer Flüssigkeit oder einem Gas enthaltend mindestens ein organisches Molekül;
b) Desorption des mindestens einen organischen Moleküls von dem Granulat.

**13.** Verfahren gemäß Anspruch 12, wobei das Granulat in einer Säule angeordnet ist.

**Claims**

**1.** Granules comprising at least one zeolite and at least one clay mineral with a cation exchange capacity of at most 200 meq/100 g, wherein the fraction of monovalent ions in the cation exchange capacity of the at least one clay mineral is at most 50% and wherein the zeolite is selected from the group consisting of β-zeolite, silicalite, mordenite, USY, MFI zeolite and mixtures thereof.

**2.** Granules according to Claim 1, wherein the at least one clay mineral is a phyllosilicate.

**3.** Granules according to Claim 2, wherein the phyllosilicate is a smectitic phyllosilicate or a mineral of the talc-pyrophyllite group.

**4.** Granules according to Claim 2, wherein the phyllosilicate is a natural or artificial mixture of a clay of the talc-pyrophyllite group and a smectitic clay.

**5.** Granules according to any of the preceding claims, wherein the fraction of the at least one clay mineral is at most 20 wt%.

**6.** Granules according to any of the preceding claims, wherein the fraction of monovalent ions in the cation exchange capacity of the at least one clay mineral is at most 45%.

**7.** Granules according to any of the preceding claims, wherein the fraction of divalent ions in the cation exchange capacity of the at least one clay mineral is at least 40%.

**8.** Granules according to any of the preceding claims, wherein the granules have a BET specific surface area of 200 to 600 $m^2/g$.

**9.** Granules according to any of the preceding claims, wherein the at least one clay mineral has a ratio of divalent ions $Ca^{2+}$ and $Mg^{2+}$ to monovalent ions, as the total of $Na^+ + K^+ + Li^+$, of between 1:2 and 20:1.

**10.** Granules according to any of the preceding claims, wherein the granules additionally comprise a fraction of metal powder of 0.01 to 20 wt%.

**11.** Use of the granules as defined in any of Claims 1 to 10 for adsorption of organic molecules from gases and liquids.

**12.** Method for adsorbing organic molecules from gases and liquids, comprising the following steps:

a) contacting granules as defined in any of Claims 1 to 10 with a liquid or a gas comprising at least one organic molecule;
b) desorbing the at least one organic molecule from the granules.

**13.** Method according to Claim 12, wherein the granules are disposed in a column.

**Revendications**

**1.** Granulat comprenant au moins une zéolithe et au moins un minéral argileux ayant une capacité d'échange de cations d'au plus 200 méq./100 g, la proportion d'ions monovalents par rapport à la capacité d'échange de cations dudit au moins un minéral argileux étant d'au plus 50 %, la zéolithe étant choisie dans le groupe constitué par la zéolithe $\beta$, la silicalite, la mordénite, la zéolithe USY, la zéolithe MFI et leurs mélanges.

**2.** Granulat selon la revendication 1, dans lequel ledit au moins un minéral argileux est un phyllosilicate.

**3.** Granulat selon la revendication 2, dans lequel le phyllosilicate est un phyllosilicate smectitique ou un minéral du groupe talc-pyrophyllite.

**4.** Granulat selon la revendication 2, dans lequel le phyllosilicate est un mélange naturel ou synthétique d'une argile du groupe talc-pyrophyllite et d'une argile smectitique.

**5.** Granulat selon l'une quelconque des revendications précédentes, dans lequel la proportion dudit au moins un minéral argileux est d'au plus 20 % en poids.

**6.** Granulat selon l'une quelconque des revendications précédentes, dans lequel la proportion d'ions monovalents par rapport à la capacité d'échange de cations dudit au moins un minéral argileux est d'au plus 45 %.

**7.** Granulat selon l'une quelconque des revendications précédentes, dans lequel la proportion d'ions bivalents par rapport à la capacité d'échange de cations dudit au moins un minéral argileux est d'au moins 40 %.

**8.** Granulat selon l'une quelconque des revendications précédentes, dans lequel le granulat présente une surface spécifique selon BET de 200 à 600 m$^2$/g.

**9.** Granulat selon l'une quelconque des revendications précédentes, dans lequel ledit au moins un minéral argileux présente un rapport entre les ions bivalents Ca$^{2+}$ et Mg$^{2+}$ et les ions monovalents, en tant que somme de Na$^+$ + K$^+$ + Li$^+$, compris entre 1:2 et 20:1.

**10.** Granulat selon l'une quelconque des revendications précédentes, dans lequel le granulat comprend en outre une proportion de poudre métallique de 0,01 à 20 % en poids.

**11.** Utilisation du granulat tel que défini dans l'une quelconque des revendications 1 à 10 pour l'adsorption de molécules organiques à partir de gaz et de liquides.

**12.** Procédé d'adsorption de molécules organiques à partir de gaz et de liquides, comprenant les étapes suivantes :

a) la mise en contact d'un granulat tel que défini dans l'une quelconque des revendications 1 à 10 avec un liquide ou un gaz contenant au moins une molécule organique ;
b) la désorption de ladite au moins une molécule organique du granulat.

**13.** Procédé selon la revendication 12, dans lequel le granulat est agencé dans une colonne.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6743745 B
- DD 0154009
- DD 268122 A3
- DD 294921 A5
- DD 121092
- WO 8912603 A
- EP 0124736 B1
- DE 3208672 A1
- EP 0124737 B1

- US 6264881 B1
- EP 1468731 A1
- WO 0001478 A
- WO 03061820 A2
- WO 2008152319 A2
- WO 2008009845 A1
- WO 2009109529 A1
- US 6171568 B1
- WO 2009109529 A


**In der Beschreibung aufgeführte Nicht-Patentliteratur**

- **DOMINGUEZ et al.** *Biotech. Bioeng.,* 2000, vol. 67, 336-343
- **J.L. DE VIDALES et al.** *Kerolite-Stevensite Mixed-Layers from the Madrid Basin, Central Spain, Clay Minerals,* 1991, vol. 26, 329-342
- **I.P. BARRET ; L.G. JOYNER ; P.P. HALENDA.** *J. Am. Chem. Soc.,* 1951, vol. 73, 373

- **A.W. ADAMSON ; A.P. GAST.** Physical Chemistry on Surfaces. Wiley, 1997, 577
- **F. EHRBURGER-DOLLE.** Fractal Characteristics of Silica Surfaces and Aggregates in The Surface Properties of Silicas. Wiley, 1998, 105